# EUROPÄISCHE PATENTSCHRIFT

(11) **EP 2 930 129 B1**
(45) Veröffentlichungstag und Bekanntmachung des Hinweises auf die Patenterteilung: **03.08.2016**
(21) Anmeldenummer: 14164366.8
(22) Anmeldetag: 11.04.2014
(51) Int. Cl.: B65G 47/68, B65G 47/71

(54) **Vorrichtung zum Vereinzeln und Weitergeben von aufrecht angeordneten Behältern**
Device for singulating and conveying upright containers
Dispositif de séparation et de transfert de récipients disposés verticalement

(43) Veröffentlichungstag der Anmeldung: 14.10.2015
(73) Patentinhaber: UHLMANN PAC-SYSTEME GmbH & Co. KG, 88471 Laupheim (DE)
(72) Erfinder: Linke, Roberto, 89231 Neu-Ulm (DE); Pöhler, Hans-Martin, 89150 Laichingen (DE)
(74) Vertreter: Wächter, Jochen

(56) Entgegenhaltungen:
- FR-A1- 2 205 463
- US-A- 2 273 509
- US-A- 3 967 717

## Beschreibung

Die vorliegende Erfindung betrifft eine Vorrichtung zum Vereinzeln und Weitergeben von aufrecht angeordneten Behältern.

Derartige Vorrichtungen werden beispielsweise in der pharmazeutischen Industrie zur Vereinzelung von Flaschen, Ampullen oder anderen Behältern verwendet.

Es existiert eine Vielzahl verschiedener Ausführungsformen zum Ausgestalten einer derartigen Vorrichtung zur Aufteilung bzw. Vereinzelung eines Förderstroms von aufrecht angeordneten Behältern.

Bei einer einfachen Ausführungsform einer Vorrichtung zur Aufteilung eines Förderstroms von aufrecht angeordneten Behältern gemäß EP 2 399 848 A1 werden die Behälter einbahnig durch eine Zuführvorrichtung an die Verteilungsstelle herantransportiert, wo sie durch eine oder mehrere Rollen aus Kunststoff oder Metall, die um eine vertikale Drehachse angetrieben sind, in zwei Förderstränge verteilt werden.

Andere Vorrichtungen zur Aufteilung und Vereinzelung eines Förderstroms von aufrecht angeordneten Behältern verwenden Sternräder, die mit Aufnahmetaschen für die Behälter versehen sind. Eine solche Vorrichtung ist beispielsweise aus DE 24 01 587 A1 bekannt. Diese Vorrichtung dient zur Verteilung von einbahnig zugeführten Gegenständen auf drei weiterführende Bahnen. Die Vorrichtung weist zwei gegenläufige, miteinander gekoppelte Sternräder auf. Jeder der Behälter des einbahnig zugeführten Produktstroms wird zunächst von einer Aufnahmetasche eines der Sternräder aufgenommen und zu einer Ausgabeposition transportiert. Durch an den Sternrädern angebrachte Schiebeelemente werden die Behälter dort aus den Aufnahmetaschen heraus geschoben und in eine der drei weiterführenden Bahnen gelenkt. Diese Vorrichtung ist mechanisch komplex und verteilt den Produktstrom lediglich in drei horizontale Äste, in denen dann noch weiterführende Verpackungsschritte für die Behälter stattfinden müssen.

Das Dokument US 2 273 509 offenbart eine Vorrichtung zum Vereinzeln und Weitergeben von aufrecht angeordneten Behältern nach dem Oberbegriff des Anspruchs 1.

Der vorliegenden Erfindung liegt die Aufgabe zugrunde, eine Vorrichtung zum Vereinzeln und Weitergeben von aufrecht angeordneten Behältern zu schaffen, die eine aktive Ein bringung der vereinzelten Behälter in dafür vorgesehene Produkthalter gewährleistet und zudem eine robuste und platzsparende Bauweise aufweist.

Diese Aufgabe wird durch die Merkmale des Anspruchs 1 gelöst.

Erfindungsgemäß weist die Vorrichtung zum Vereinzeln und Weitergeben von aufrecht angeordneten Behältern eine Zuführvorrichtung zum einreihigen Herantransportieren der Behälter und eine Vereinzelungseinheit mit einem ersten Sternrad und einem zweiten Sternrad auf. Die Sternräder weisen Aufnahmetaschen auf, um die herantransportierten Behälter an einer Aufnahmeposition aufzunehmen und zu einer Ausgabeposition zu transportieren, wobei die Sternräder parallele Drehachsen, aber eine entgegengesetzte Drehrichtung aufweisen. Des Weiteren umfasst die Vorrichtung zum Vereinzeln und Weitergeben eine Drückeinheit, die mindestens einen Drückstößel umfasst, der im Bereich der Ausgabeposition in einer Richtung parallel zu den Drehachsen der Sternräder und durch die jeweilige Aufnahmetasche hindurch hin- und herbewegbar ist.

Mit dieser Ausgestaltung wird eine robuste und platzsparende Vorrichtung geschaffen, die zur schnellen Vereinzelung von aufrecht angeordneten Behältern und zu einer aktiven Einbringung der vereinzelten Behälter in dafür vorgesehene Produkthalter dient.

Um einen unabhängigen Betrieb des ersten Sternrads und des zweiten Sternrads zu gewährleisten, umfassen vorzugsweise das erste Sternrad einen ersten Antrieb und das zweite Sternrad einen zweiten Antrieb. Die Sternräder sind somit unabhängig voneinander ansteuerbar, und es können beliebige geeignete Bewegungsmuster der beiden Sternräder eingestellt werden, die zu einem optimalen Ablauf von Aufnahme, Transport und Abgabe der Behälter dienen.

Besonders vorteilhaft ist es, wenn der erste und der zweite Antrieb derart angesteuert sind, dass sie eine getaktete Bewegung der Sternräder erzeugen. Dadurch wird die Aufnahme der Behälter in die Aufnahmetaschen der Sternräder und die Abgabe der Behälter vereinfacht.

Besonders vorteilhaft ist es, wenn die Antriebe derart ansteuerbar sind, dass die Aufnahmetaschen des ersten Sternrads zwischen der Aufnahmeposition und der Ausgabeposition zeitweise versetzt zu den Aufnahmetaschen des zweiten Sternrads sind. Auf diese Weise wird sichergestellt, dass jede Aufnahmetasche beider Sternräder im Bereich der Aufnahmeposition einen Behälter aufnimmt und diesen zur Ausgabeposition transportiert.

Damit bei einem Drückvorgang der Drückstößel nicht verkantet oder eines der Sternräder beschädigt, stehen die ersten und zweiten Antriebe während des Drückvorgangs an der Ausgabeposition still.

Um den Durchsatz zu beschleunigen, weist die Drückeinheit vorzugsweise zwei Drückstößel auf.

Aus ergonomischen Gründen ist es vorteilhaft, wenn die zwei Drückstößel einen gemeinsamen dritten Antrieb aufweisen.

Vorzugsweise sind die beiden Drückstößel über einen starren Verbindungssteg miteinander verbunden, wodurch die Bewegung der beiden Drückstößel an der Ausgabeposition des ersten und des zweiten Sternrads simultan erfolgt.

Vorzugsweise ist der dritte Antrieb ein Exzenterantrieb.

Um ein sicheres Eindrücken der Behälter in die jeweiligen Produkthalter zu gewährleisten, durchdringt der mindestens eine Drückstößel bei dem Drückvorgang die Aufnahmetasche des jeweiligen Sternrads vorzugsweise vollständig.

Vorteilhafterweise umfasst die Vereinzelungseinheit ein Gehäuse mit Seitenwänden, einer Oberseite und einer Unterseite, wobei das Gehäuse ein Führungselement mit zwei Führungsflächen aufweist, die im Bereich eines dritten bzw. eines vierten Quadranten der Sternräder die Sternräder seitlich umgeben und somit die Behälter in dem dritten bzw. in dem vierten Quadranten von den Aufnahmetaschen und den Führungsflächen geführt sind. Dadurch wird gewährleistet, dass die Behälter während eines Transportvorgangs von der Aufnahmeposition zur Ausgabeposition zu jeder Zeit in den Aufnahmetaschen des jeweiligen Sternrades verbleiben.

Als Auflagefläche für die Behälter während der Drehbewegung weist die Vorrichtung eine Auflageplatte auf.

Damit die Behälter an den Ausgabepositionen aus den Aufnahmetaschen herausrutschen, weist die Auflageplatte im Bereich der Ausgabepositionen Durchtrittsöffnungen auf.

Alternativ bildet die Auflageplatte im Bereich der Ausgabepositionen eine Abwurfkante.

Vorzugsweise weist die Vorrichtung außerdem ein Fördermittel für Produkthalter auf, in die die Drückstößel die Behälter bei dem Drückvorgang eindrücken. Die Produkthalter mit den eingedrückten Behältern stehen somit vereinzelt zur weiteren Verarbeitung bereit.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform der erfindungsgemäßen Vorrichtung zum Vereinzeln und Weitergeben von aufrecht angeordneten Behältern vor Ausführung eines Drückvorgangs durch die Drückeinheit;
- Fig. 2: ist eine perspektivische Ansicht, teilweise im Querschnitt, der Vorrichtung aus Fig. 1 während des Drückvorgangs;
- Fig. 3: ist eine schematische Draufsicht auf die Vorrichtung aus Fig. 1 ohne Drückeinheit, wobei das erste und zweite Sternrad sich in einer Ausgangsstellung befinden, in der jeweils eine Aufnahmetasche jedes Sternrads befüllt ist;
- Fig. 4: ist eine Ansicht wie in Fig. 3, wobei das erste Sternrad bereits in Bewegung versetzt wurde, während das zweite Sternrad noch stillsteht;
- Fig. 5: ist eine Ansicht wie in Fig. 4, wobei sich auch das zweite Sternrad in Bewegung gesetzt hat;
- Fig. 6: ist eine Ansicht wie in Fig. 5, wobei das erste Sternrad so weit gedreht ist, dass es im Bereich der Aufnahmeposition einen weiteren Behälter in eine weitere Aufnahmetasche aufnimmt;
- Fig. 7: ist eine Ansicht wie in Fig. 6, wobei das zweite Sternrad mit einem zweiten Behälter befüllt wird und die Position des ersten Sternrads kaum verändert zu der Position in Fig. 6 ist;
- Fig. 8: ist eine Ansicht wie in Fig. 7, wobei das erste Sternrad so weit gedreht ist, dass der erste Behälter im ersten Sternrad in der Ausgabeposition nach unten gefallen ist;
- Fig. 9: ist eine Ansicht wie in Fig. 8, wobei auch das zweite Sternrad so weit gedreht ist, dass der erste Behälter im zweiten Sternrad sich kurz vor der Ausgabeposition befindet;
- Fig. 10: ist eine Ansicht wie in Fig. 9, wobei das zweite Sternrad so weit gedreht ist, dass der erste Behälter im zweiten Sternrad in der Ausgabeposition ebenfalls nach unten gefallen ist; und
- Fig. 11: ist eine Perspektivansicht der Vorrichtung aus Fig. 1 ohne Drückeinheit, betrachtet von der Seite der Behälterzuführung.

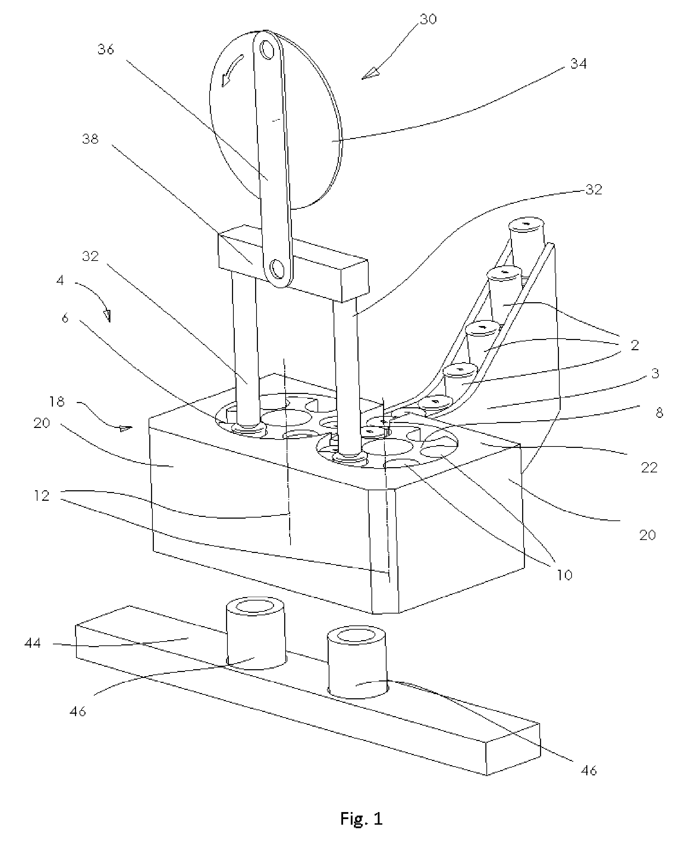

Fig. 1, 2 und 11 zeigen den grundsätzlichen Aufbau einer erfindungsgemäßen Vorrichtung. Aufrecht angeordnete Behälter 2, wie beispielsweise Flaschen, Ampullen, Kartuschen oder dergleichen, werden mithilfe einer Zuführvorrichtung 3 einreihig an eine Vereinzelungseinheit 4 herantransportiert. Die Zuführvorrichtung 3 kann unter anderem als Stauband, als Rutsche oder dergleichen ausgebildet sein. Durch die Zuführeinrichtung 3 ist der kontinuierliche Nachschub der Behälter 2 geregelt, so dass jeder Behälter 2 von den nachfolgenden Behältern 2 in die Vereinzelungseinheit 4 gedrückt wird.

Die Vereinzelungseinheit 4 weist ein erstes Sternrad 6 und ein zweites Sternrad 8 auf, wobei jedes der beiden Sternräder 6, 8 mit Aufnahmetaschen 10 ausgestattet ist, um die Behälter 2 aufnehmen zu können. Im dargestellten Beispielsfall weisen die Sternräder 6, 8 sechs Aufnahmetaschen 10 je Sternrad 6, 8 auf. Es ist aber auch denkbar, dass jedes Sternrad 6, 8 eine beliebige andere Anzahl an Aufnahmetaschen 10 aufweist. Das erste Sternrad 6 und das zweite Sternrad 8 weisen parallele Drehachsen 12 auf, um die sich die Sternräder 6, 8 in entgegengesetzter Richtung drehen. Im dargestellten Beispielsfall dreht sich das erste Sternrad 6 im Uhrzeigersinn und das zweite Sternrad 8 gegen den Uhrzeigersinn. Die Drehachsen 12 der Sternräder 6, 8 verlaufen im Wesentlichen senkrecht zu der Richtung, in der die Behälter 2 in die Vereinzelungseinheit 4 einlaufen. Die Sternräder 6, 8 liegen eng aneinander und bilden einen Einlaufzwickel, sodass sich die Behälter 2, die von der Zuführvorrichtung 3 einreihig herantransportiert werden, sowohl auf das erste Sternrad 6 als auch auf das zweite Sternrad 8 verteilen.

An einer Aufnahmeposition A wird ein Behälter 2 in eine der Aufnahmetaschen 10 des ersten Sternrads 6 aufgenommen, und ebenso wird an einer Aufnahmeposition A ein Behälter 2 in eine der Aufnahmetaschen 10 des zweiten Sternrads 8 aufgenommen. Aufgrund der entgegengesetzten Drehrichtung der Sternräder 6, 8 sind die Behälter 2 in den Aufnahmetaschen 10 während der Drehbewegung jeweils dem anderen Sternrad 6, 8 zugewandt und werden auf diese Weise jeweils zu einer Ausgabeposition B transportiert.

In der dargestellten Ausführungsform weist die Vereinzelungseinheit 4 ein blockförmiges Gehäuse 18 mit Seitenwänden 20, einer Oberseite 22 und einer Unterseite 24 auf. In dem Gehäuse 18 sind die beiden Sternräder 6, 8 so gelagert, dass ihre Drehachsen 12 parallel sind. Vorzugsweise ist die Höhe der Seitenwände 20 und somit die Höhe des Gehäuses 18 größer als die oder gleich der Höhe der Sternräder 6, 8, sodass die Sternräder 6, 8 in dem Gehäuse 18 vollständig aufgenommen sind. Weiterhin weist das Gehäuse 18 ein Führungselement 26 mit Führungsflächen 28, insbesondere zwei Führungsflächen 28, auf. Die Führungsflächen 28 sind gekrümmt, verlaufen über die gesamte Höhe des Gehäuses 18 parallel zu den Drehachsen 12 der Sternräder 6, 8 und umgeben somit das jeweilige Sternrad 6, 8 über einen Kreisbogenabschnitt. Da die Führungsflächen 28 spiegelbildlich angeordnet sind, weist das Führungselement 26 im Querschnitt die Form eines spitzen Berges mit abgerundeten Seitenflanken auf. Die eine Führungsfläche 28 umgibt das erste Sternrad 6 in einem vierten Quadranten seitlich, wenn die Zählung der Quadranten wie üblich im Bild hinten rechts beginnt und sich gegen den Uhrzeigersinn fortsetzt. Die Aufnahmeposition A des ersten Sternrads 6 wäre demnach im ersten Quadranten des ersten Sternrads 6 angeordnet. Analog dazu wird das zweite Sternrad 8 von der anderen Führungsfläche 28 des Führungselements 26 in einem dritten Quadranten des zweiten Sternrads 8 seitlich umgeben, während die Aufnahmeposition A sich im zweiten Quadranten dieses Sternrads 8 befindet. Die Behälter 2 werden somit in einem vierten Quadranten des ersten Sternrads 6 und in einem dritten Quadranten des zweiten Sternrads 8 nicht nur von den Aufnahmetaschen 10, sondern außerdem von den Führungsflächen 28 geführt. Damit wird gewährleistet, dass sich die Behälter 2 während des Transports von der Aufnahmeposition A zu der Ausgabeposition B, die im dargestellten Beispielsfall im Übergangsbereich zwischen drittem und viertem Quadranten angeordnet ist, in den Aufnahmetaschen 10 der Sternräder 6, 8 verbleiben.

Alternativ oder ergänzend können Greif- oder Saugmechanismen in den Aufnahmetaschen 10 vorgesehen sein, die die Behälter während des Transports von der Aufnahmeposition A zu der Ausgabeposition B in den Aufnahmetaschen 10 festhalten. Diese müssten spätestens an der Ausgabeposition B betätigungslos gesetzt werden.

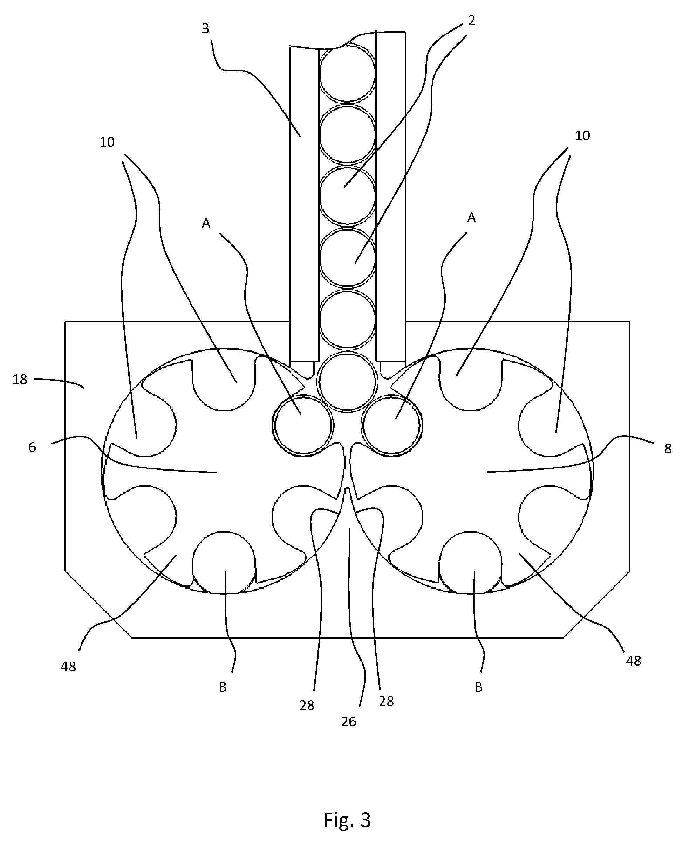

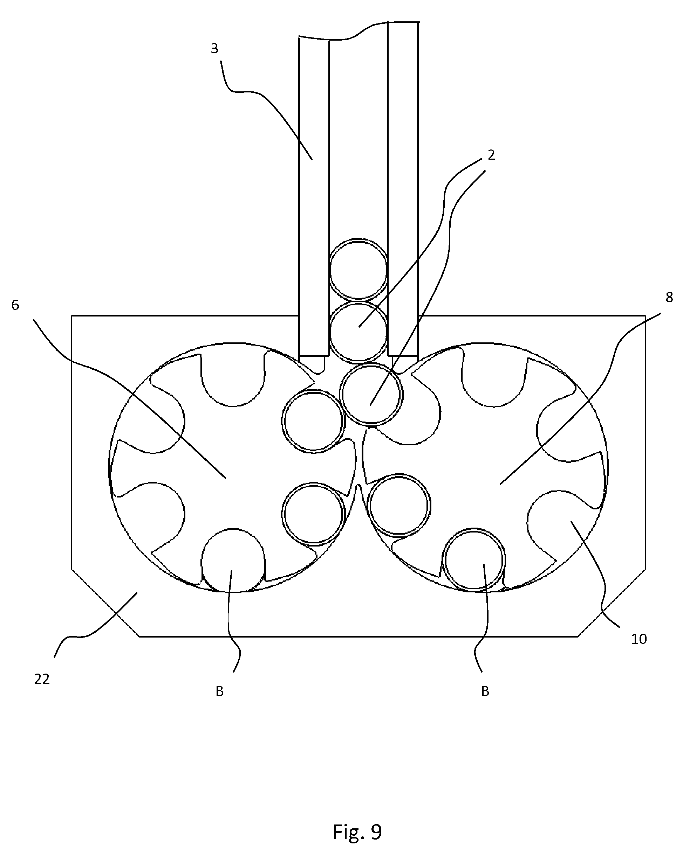

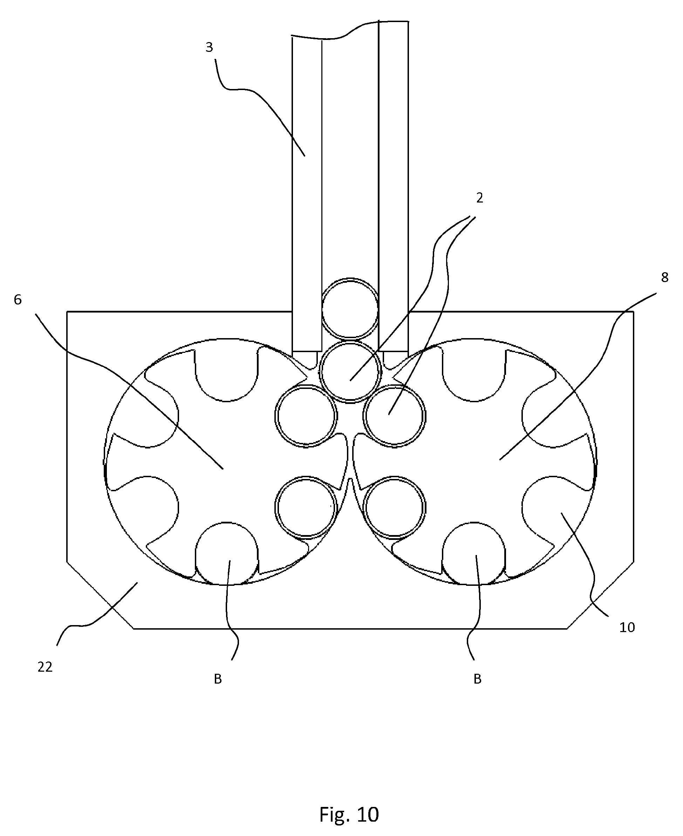

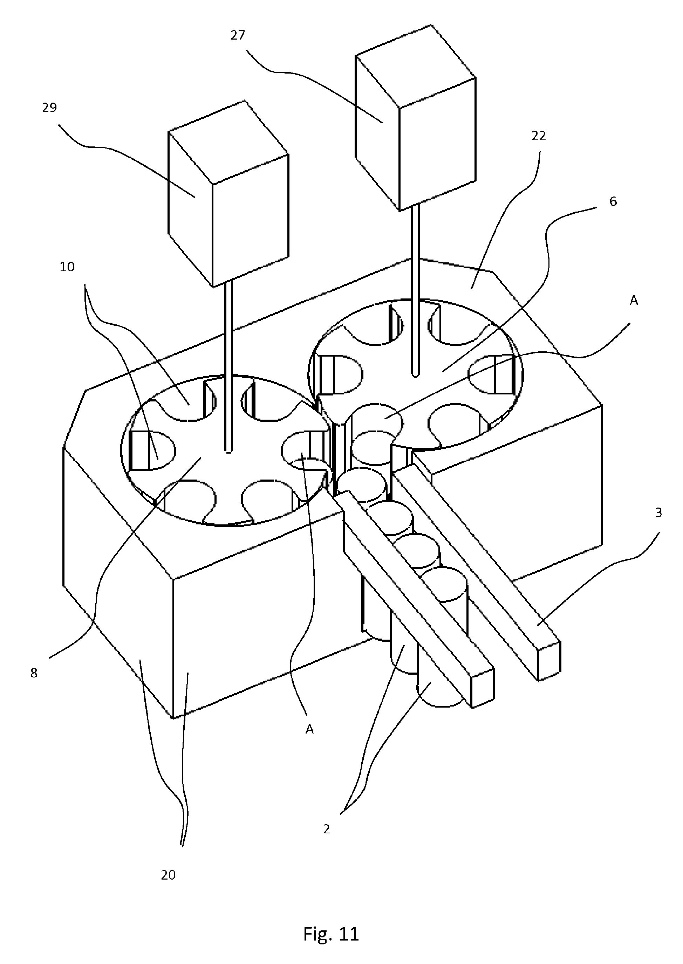

In einer bevorzugten Ausführungsform weisen das erste Sternrad 6 einen ersten Antrieb 27 (schematisch in Fig. 11 dargestellt) und das zweite Sternrad 8 einen zweiten Antrieb 29 (ebenfalls schematisch in Fig. 11 dargestellt) auf. Das Ansteuern der Sternräder 6, 8 kann somit unabhängig voneinander erfolgen und somit kann das eine Sternrad 6, 8 gestoppt werden, während das andere Sternrad 6, 8 unverändert weiter läuft. Auf die bevorzugte Funktionsweise des ersten Antriebs 27 und des zweiten Antriebs 29 wird weiter unten unter Bezugnahme auf Fig. 3 bis 10 näher eingegangen.

Die Drückeinheit 30 umfasst mindestens einen Drückstößel 32, der im Bereich der Ausgabepositionen B parallel zu den Drehachsen 12 des ersten Sternrads 6 und des zweiten Sternrads 8 hin- und herbewegbar ist. Der Drückstößel 32 durchdringt beim Drückvorgang die an der Ausgabeposition B befindliche Aufnahmetasche 10 des jeweiligen Sternrads 6, 8 vollständig.

In einer bevorzugten Ausführungsform umfasst die Drückeinheit 30 wie dargestellt zwei Drückstößel 32, wobei jeder Drückstößel 32 parallel zu den Drehachsen 12 der Sternräder 6, 8 im Bereich der Ausgabeposition B angeordnet ist. Die zwei Drückstößel 32 weisen vorzugsweise einen gemeinsamen dritten Antrieb 34 auf, der als Exzenterantrieb ausgestaltet sein kann. Vorzugsweise sind die beiden Drückstößel 32 über einen Verbindungssteg 38 miteinander verbunden. Der Verbindungssteg 38 ist wiederum mittels eines Pleuels 36 oder einer Schubkurbel mit dem dritten Antrieb 34 verbunden. Das Pleuel 36 ist derart an dem Verbindungssteg 38 befestigt, dass die beiden Drückstößel 32 bei Bewegung des dritten Antriebs 34 entweder gemeinsam nach unten oder nach oben bewegt werden.

Auch wenn vorzugsweise zwei Drückstößel 32 vorgesehen sind, kann auch nur ein Druckstößel 32 vorgesehen sein, der dann zwischen den beiden Ausgabepositionen B hin- und herbewegt werden muss und den Drückvorgang an den beiden Ausgabepositionen B nacheinander vornimmt. Ebenso können zwei Drückstößel 32 mit zeitlichem Versatz bewegt werden. Hierzu wären andere Antriebe der Drückstößel 32 notwendig.

Die Behälter 2 können während der Drehbewegung der Sternräder 6, 8 auf einer Auflageplatte 40 abgestützt sein. Die Auflageplatte 40 kann mit dem Gehäuse 18 der Vereinzelungseinheit 4 fest verbunden sein. Auch ist es vorstellbar, dass die Unterseite 24 des Gehäuses 18 selbst die Auflageplatte 40 bildet. Im Bereich der Ausgabepositionen B weist die Auflageplatte 40 Durchtrittsöffnungen 42 auf, durch die die Behälter 2 fallen. In einer weiteren Ausführungsform kann die Auflageplatte 40 im Bereich der Ausgabepositionen B enden und somit eine Abwurfkante bilden.

Unterhalb der Vereinzelungseinheit 4 ist ein Fördermittel 44 angeordnet, das Produkthalter 46 transportiert. Die Produkthalter 46 liegen mit ihren oberen Enden nahe an der Unterseite 24 des Gehäuses 18. Die Behälter 2 fallen somit durch die Durchtrittsöffnungen 42 direkt in die Produkthalter 46 hinein, ohne zu verkanten. Dabei weisen die Produkthalter 46 eine Größe auf, die an die Durchmesser der Behälter 2 angepasst ist. Für das Fördermittel 44 sind verschiedene Ausgestaltungen möglich. Vorzugsweise ist das Fördermittel 44 ein Förderband oder eine Drehscheibe mit Aufnahmen für die Produkthalter 46. Die Produkthalter 46 können bereits als Endverpackung für die Behälter 2 dienen, oder sie können selbst noch weiterverarbeitet und verpackt werden.

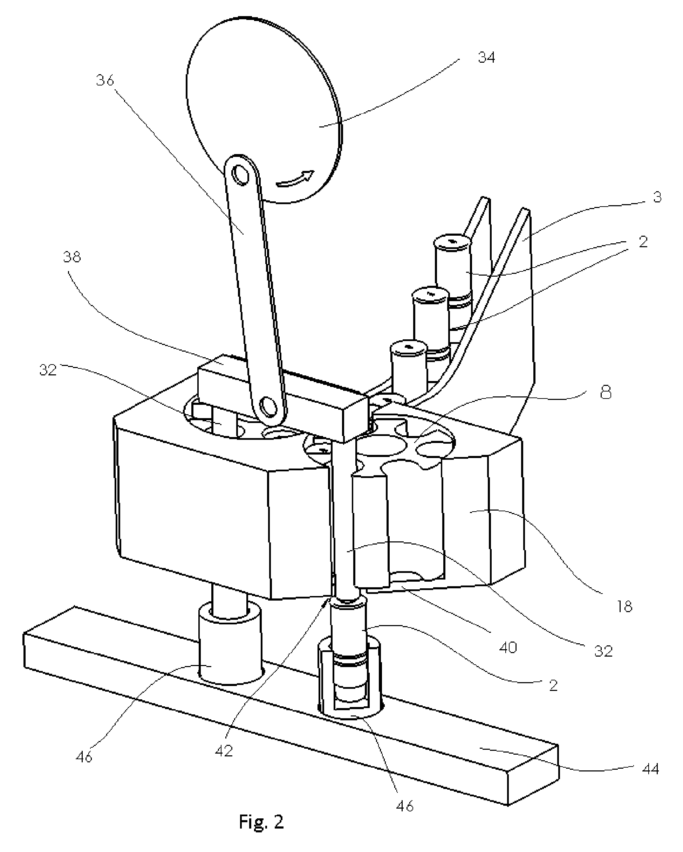

In Fig. 2 ist der Ausgabebereich B des zweiten Sternrads 8 in der abgebrochenen Darstellung komplett sichtbar. Es ist zu erkennen, dass die Drückstößel 32 in ihrer nach unten bewegten Position die Behälter 2 in die Produkthalter 46 eindrücken und die Aufnahmetasche 10 des jeweiligen Sternrads 6, 8 dabei vollständig durchdringen. Durch das Eindrücken wird die Klemmung des Behälters 2 im Produkthalter 46 verbessert oder ein Einrastmechanismus im Produkthalter 46 aktiviert.

Bezug nehmend auf Fig. 3 bis 10 wird nun der Ablauf der Betätigung der erfindungsgemäßen Vorrichtung beschrieben. Grundsätzlich werden die Behälter 2 zunächst von der Zuführvorrichtung 3 in den Bereich der Aufnahmepositionen A herantransportiert und dort in Aufnahmetaschen 10 der Sternräder 6, 8 aufgenommen. Die Befüllung einer Aufnahmetasche 10 erfolgt durch das Nachrücken bzw. Nachschieben der Behälter 2 in der Zuführvorrichtung 3. Anschließend werden die Behälter 2 durch gegensinnige Drehung der beiden Sternräder 6, 8 zu den Ausgabepositionen B transportiert. An den Ausgabepositionen B fallen die Behälter 2 in die Produkthalter 46 und werden anschließend durch die Drückstößel 32 fest in die Produkthalter 46 eingedrückt. Die Bewegung der Sternräder 6, 8 erfolgt getaktet, wie nachfolgend näher erläutert wird.

In Fig. 3 befinden sich die beiden Sternräder 6, 8 in einer Ausgangsposition, in der eine erste Aufnahmetasche 10 des jeweiligen Sternrads 6, 8 bereits mit einem Behälter 2 gefüllt ist. Die Ausgabepositionen B sind hingegen noch nicht besetzt. Aus Fig. 3 ist ersichtlich, dass die Behälter 2 durch eine Drehbewegung der Sternräder 6,8 um zwei Teilungsabstände der Aufnahmetaschen 10 von der Aufnahmeposition A zur Ausgabeposition B geführt werden können. Somit sind immer höchstens zwei Aufnahmetaschen 10 in dem jeweiligen Sternrad 6, 8 gleichzeitig befüllt. Selbstverständlich können je nach Struktur der Sternräder 6, 8 und der Anordnung der Aufnahmepositionen A und Ausgabepositionen B andere Ausgestaltungen vorliegen.

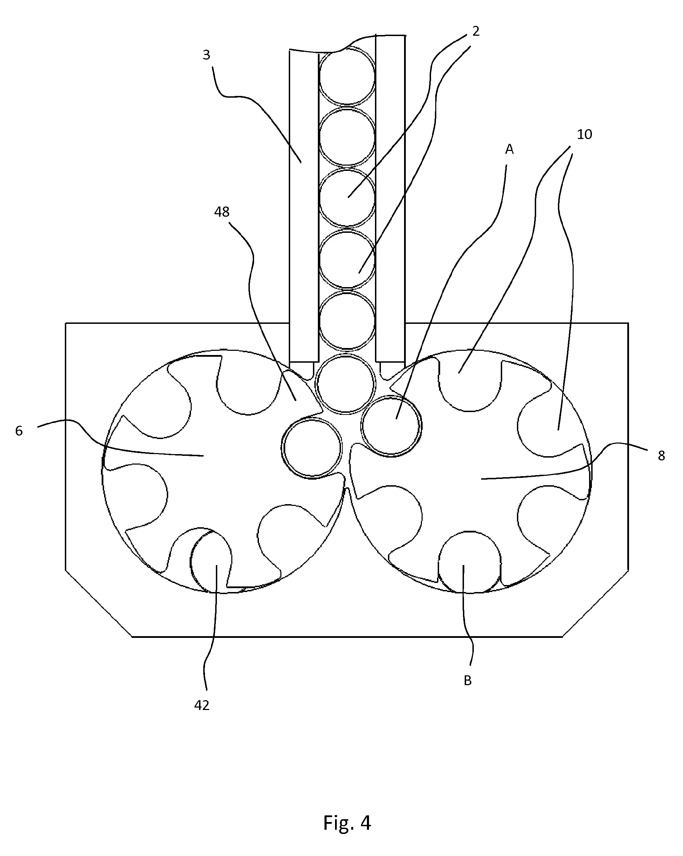

In Fig. 4 hat sich das erste Sternrad 6 mit der befüllten Aufnahmetasche 10 im Uhrzeigersinn in Bewegung gesetzt. Das zweite Sternrad 8 verbleibt noch in seiner Ausgangsposition.

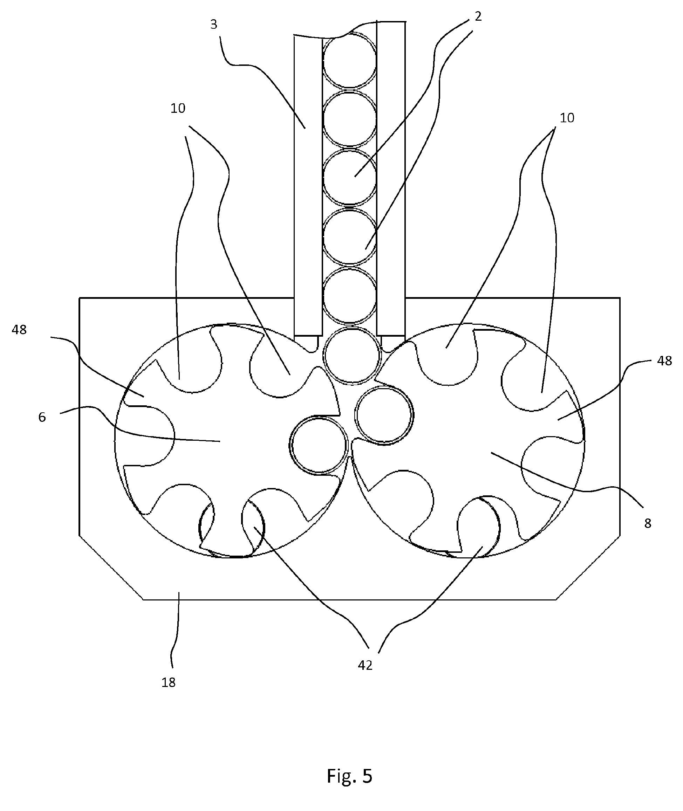

In Fig. 5 hat sich nun auch das zweite Sternrad 8 gegen den Uhrzeigersinn drehend in Bewegung gesetzt. Die Drehung des zweiten Sternrads 8 ist zeitlich versetzt zu der Drehung des ersten Sternrads 1, findet aber vorzugsweise mit dem gleichen Geschwindigkeitsprofil statt.

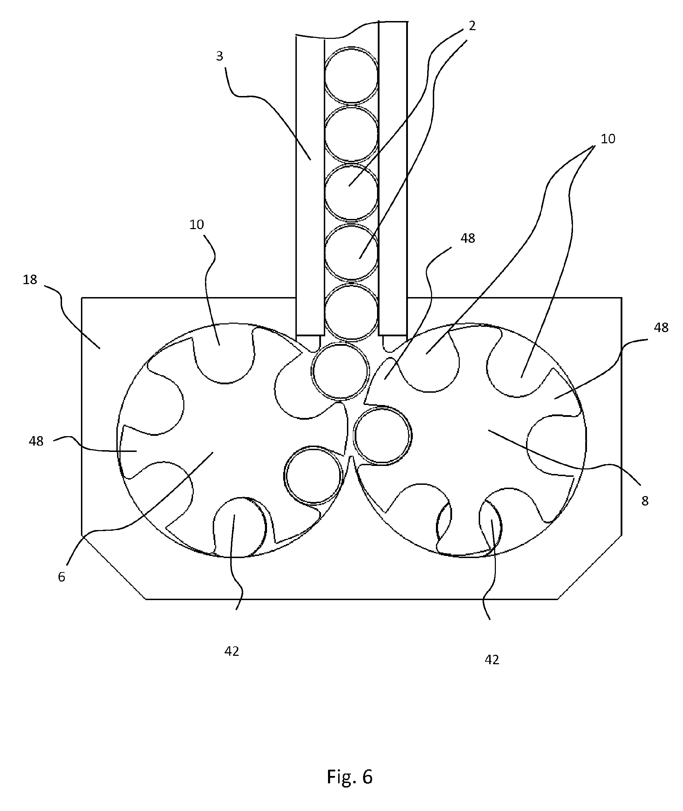

In Fig. 6 ist das erste Sternrad 6 so weit gedreht, dass eine zweite Aufnahmetasche 10 mit einem weiteren Behälter 2 befüllt werden kann. Kurz nach dieser Position wird das erste Sternrad 6 angehalten, während sich das zweite Sternrad 8 weiterdreht.

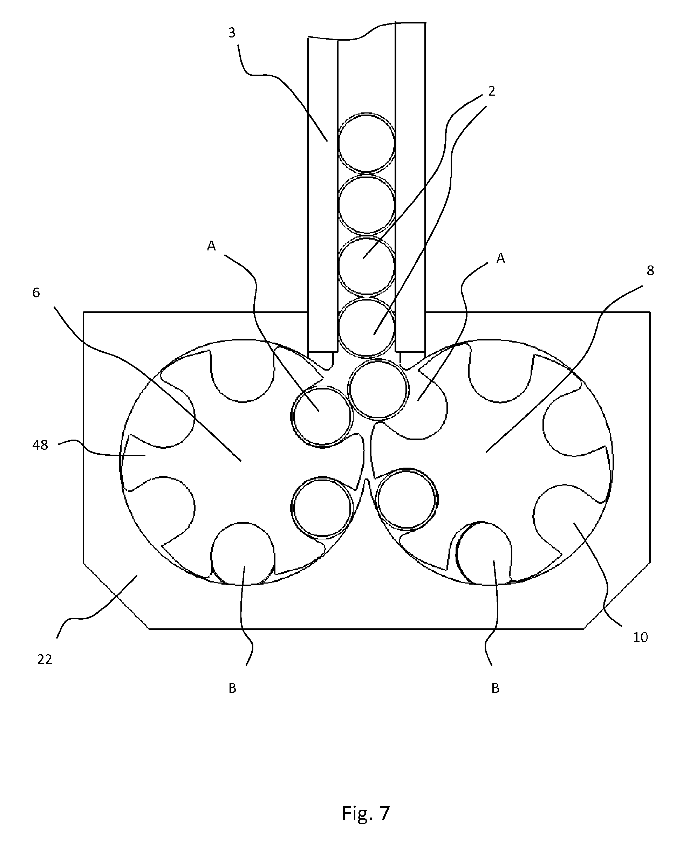

Fig. 7 zeigt einen Zustand, in dem das erste Sternrad 6 stillsteht, während das zweite Sternrad 8 weitergedreht wird und nun auch eine zweite Aufnahmetasche 10 des zweiten Sternrads 8 in der Aufnahmeposition A mit einem Behälter 2 gefüllt wird. Kurz danach bleibt auch das zweite Sternrad 8 stehen, sodass sich eine spiegelsymmetrische Anordnung beider Sternräder 6, 8 um die Längsmittelachse der Vorrichtung ergibt.

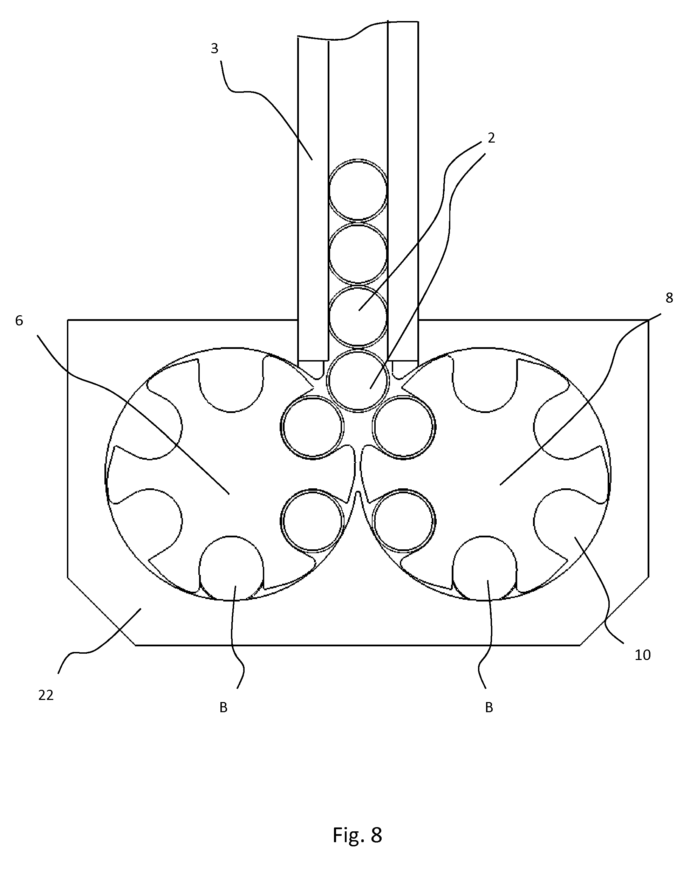

Ein weiteres Drehen zuerst des ersten Sternrads 6 und anschließend auch des zweiten Sternrads 8 bringt die ersten Behälter 2 jeweils nacheinander in die Ausgabeposition B (siehe Fig. 8 bis 10), wo sie durch die Durchtrittsöffnungen 42 in die Produkthalter 46 fallen. Anschließend werden die Behälter 2 mit Hilfe der Drückstößel 32 vorzugsweise gleichzeitig in die Produkthalter 46 fest eingedrückt, wie aus Fig. 2 ersichtlich ist.

Für das Einfügen der Behälter 2 in die Aufnahmetaschen 10 ist der versetzt getaktete Bewegungsablauf der Sternräder 6, 8, der in Fig. 3 bis 10 dargestellt ist, von besonderem Vorteil. Ist die Aufnahmetasche 10 des ersten Sternrades 6 gefüllt und eine Aufnahmetasche 10 des zweiten Sternrads 8 befindet sich in der Aufnahmeposition A, gleitet der nachrückende Behälter 2 an dem Behälter 2, der sich bereits in der Aufnahmetasche 10 des ersten Sternrads 6 befindet, ab und wird in die Aufnahmetasche 10 des zweiten Sternrads 8 geführt (siehe Fig. 7). Befindet sich hingegen eine Aufnahmetasche 10 des ersten Sternrads 6 in der Aufnahmeposition A und das zweite Sternrad 8 in der Drehbewegung, so gleitet der nachfolgende Behälter 2 an einem Steg 48, der zwischen zwei aufeinanderfolgenden Aufnahmetaschen des zweiten Sternrads 8 ausgebildet ist, ab und wird in die Aufnahmetasche 10 des ersten Sternrads 6 geführt (siehe Fig. 6). Das gleiche gilt umgekehrt.

Selbstverständlich ist es auch vorstellbar, dass zunächst das zweite Sternrad 8 gedreht wird und anschließend das erste Sternrad 6. Außerdem kann die Drehrichtung beider Sternräder 6, 8 umgekehrt sein. Es sind auch viele weitere getaktete Bewegungsabläufe der beiden Sternräder 6, 8 denkbar, bei der mehr oder weniger als zwei Aufnahmetaschen 10 jedes Sternrads 6, 8 gleichzeitig mit einem Behälter 2 befüllt sind. Auch die Stellungen der Aufnahmeposition A und Ausgabeposition B sind variabel.

## Patentansprüche

1. Vorrichtung zum Vereinzeln und Weitergeben von aufrecht angeordneten Behältern (2), mit
einer Zuführvorrichtung (3) zum einreihigen Herantransportieren der Behälter (2),
einer Vereinzelungseinheit (4) mit einem ersten Sternrad (6) und einem zweiten Sternrad (8), von denen jedes Aufnahmetaschen (10) aufweist, um die herantransportierten Behälter (2) jeweils an einer Aufnahmeposition (A) aufzunehmen und zu einer Ausgabeposition (B) zu transportieren, wobei die Sternräder (6, 8) parallele Drehachsen (12), aber eine entgegengesetzte Drehrichtung aufweisen,
**dadurch gekennzeichnet, dass**
die Vorrichtung eine Drückeinheit (30) aufweist, die mindestens einen Drückstößel (32) umfasst, der im Bereich der Ausgabepositionen (B) in einer Richtung parallel zu den Drehachsen (12) der Sternräder (6, 8) und durch die jeweilige Aufnahmetasche (10) hindurch hin- und herbewegbar ist.

2. Vorrichtung nach Anspruch 1, **dadurch gekennzeichnet, dass** das erste Sternrad (6) einen ersten Antrieb (27) und das zweite Sternrad (8) einen zweiten Antrieb (29) aufweist und die Sternräder (6, 8) somit unabhängig voneinander ansteuerbar sind.

3. Vorrichtung nach Anspruch 1 oder 2, **dadurch gekennzeichnet, dass** der erste Antrieb (27) und der zweite Antrieb (29) zu einer getakteten Bewegung ansteuerbar sind.

4. Vorrichtung nach einem der vorangehenden Ansprüche, **dadurch gekennzeichnet, dass** die Antriebe (27, 29) derart ansteuerbar sind, dass die Aufnahmetaschen (10) des ersten Sternrads (6) zwischen der Aufnahmeposition (A) und der Ausgabeposition (B) zeitweise versetzt zu den Aufnahmetaschen (10) des zweiten Sternrads (8) sind.

5. Vorrichtung nach einem der vorangehenden Ansprüche, **dadurch gekennzeichnet, dass** die Antriebe (27, 29) während eines Drückvorgangs an der Ausgabeposition (B) stillstehen.

6. Vorrichtung nach einem der vorangehenden Ansprüche, **dadurch gekennzeichnet, dass** die Drückeinheit (30) zwei Drückstößel (32) aufweist.

7. Vorrichtung nach Anspruch 6, **dadurch gekennzeichnet, dass** die zwei Drückstößel (32) einen gemeinsamen dritten Antrieb (34) aufweisen.

8. Vorrichtung nach Anspruch 7, **dadurch gekennzeichnet, dass** die beiden Drückstößel (32) über einen starren Verbindungssteg (38) miteinander verbunden sind und somit die Bewegung der beiden Drückstößel (32) an der Ausgabeposition (B) des ersten Sternrads (6) und des zweiten Sternrads (8) gleichzeitig erfolgt.

9. Vorrichtung nach Anspruch 7 oder 8, **dadurch gekennzeichnet, dass** der dritte Antrieb (34) ein Exzenterantrieb ist.

10. Vorrichtung nach einem der vorangehenden Ansprüche, **dadurch gekennzeichnet, dass** der mindestens eine Drückstößel (32) die Aufnahmetasche (10) des jeweiligen Sternrads (6, 8) bei dem Drückvorgang vollständig durchdringt.

11. Vorrichtung nach einem der vorangehenden Ansprüche, **dadurch gekennzeichnet, dass** die Vereinzelungseinheit (4) ein Gehäuse (18) mit Seitenwänden (20), einer Oberseite (22) und einer Unterseite (24) aufweist, wobei das Gehäuse (18) ein Führungselement (26) mit zwei Führungsflächen (28) aufweist, die im Bereich eines dritten bzw. eines vierten Quadranten der Sternräder (6, 8) das jeweilige Sternrad (6, 8) seitlich umgeben und somit die Behälter (2) in dem dritten bzw. in dem vierten Quadranten von den Aufnahmetaschen (10) und den Führungsflächen (28) geführt sind.

12. Vorrichtung nach einem der vorangehenden Ansprüche, **dadurch gekennzeichnet, dass** sie eine Auflageplatte (40) aufweist, auf der die Behälter (2) während der Drehbewegung abgestützt sind.

13. Vorrichtung nach einem der vorangehenden Ansprüche, **dadurch gekennzeichnet, dass** die Auflageplatte (40) im Bereich der Ausgabepositionen (B) Durchtrittsöffnungen (42) aufweist.

14. Vorrichtung nach einem der Ansprüche 1 bis 12, **dadurch gekennzeichnet, dass** die Auflageplatte (40) im Bereich der Ausgabepositionen (B) eine Abwurfkante bildet.

15. Vorrichtung nach einem der vorangehenden Ansprüche, **dadurch gekennzeichnet, dass** sie außerdem ein Fördermittel (44) für Produkthalter (46) aufweist, in die die Drückstößel (32) die Behälter (2) bei dem Drückvorgang eindrücken.

## Claims

1. Device for singulating and conveying upright containers (2), with a supply device (3) for conveying the containers in a single row, a singulating unit (4) with a first star wheel (6) and a second star wheel (8) of which each has receiving pockets (10) in order to receive the transported containers (2) at a receiving position (A) and to transport same to a delivery position (B), wherein the star wheels (6, 8) have parallel axes of rotation (12) but opposing directions of rotation,
**characterised in that** the device has a pressure unit (30) which comprises at least one pressure ram (32) which can be moved to and fro in the region of the delivery positions (B) in a direction parallel to the axes of rotations (12) of the star wheels (6, 8) and through the respective receiving pocket (10).

2. Device according to claim 1 **characterised in that** the first star wheel (6) has a first drive (27) and the second star wheel (8) has a second drive (29) and the star wheels (6, 8) are thus controllable independently of one another.

3. Device according to claim 1 or 2 **characterised in that** the first drive (27) and the second drive (29) can be controlled in a cyclical motion.

4. Device according to one of the preceding claims **characterised in that** the drives (27, 29) are controllable so that the receiving pockets (10) of the first star wheel (6) between the receiving position (A) and the delivery position (B) are staggered in time relative to the receiving pockets (10) of the second star wheel (8).

5. Device according to one of the preceding claims **characterised in that** the drives (27, 29) are stationary during a pressing process at the delivery position (B).

6. Device according to one of the preceding claims **characterised in that** the pressure unit (30) has two pressure rams (32).

7. Device according to claim 6 **characterised in that** the two pressure rams (32) have a common third drive (34).

8. Device according to claim 7 **characterised in that** the two pressure rams (32) are connected to one another by a rigid connecting web (38) and thus the movement of the two pressure rams (32) takes place simultaneously at the delivery position (B) of the first star wheel (6) and second star wheel (8).

9. Device according to claim 7 or 8 **characterised in that** the third drive (34) is an eccentric drive.

10. Device according to one of the preceding claims **characterised in that** the at least one pressure ram (32) passes completely through the receiving pocket (10) of the respective star wheel (6, 8) during the pressing process.

11. Device according to one of the preceding claims **characterised in that** the singulating unit (4) has a housing (18) with side walls (20), an upper side (22) and an underneath side (24) wherein the housing (18) has a guide element (26) with two guide faces (28), which in the region of a third and fourth quadrant respectively of the star wheels (6, 8) laterally enclose the respective star wheel (6, 8), and thus the containers (2) are guided in the third and in the fourth quadrant by the receiving pockets (10) and the guide faces (28).

12. Device according to one of the preceding claims **characterised in that** it has a support plate (40) on which the containers (2) are supported during the rotational movement.

13. Device according to one of the preceding claims **characterised in that** the support plate (40) has through openings (42) in the region of the delivery positions (B).

14. Device according to one of claims 1 to 12 **characterised in that** the support plate (40) forms a release edge in the region of the delivery positions (B).

15. Device according to one of the preceding claims **characterised in that** it furthermore has conveying means (44) for product holders (46) into which the pressure rams (32) press the containers (2) during the pressing process.

## Revendications

1. Dispositif pour séparer et transmettre des contenants (2) disposés verticalement, comprenant
un dispositif d'amenée (3) pour rapprocher les contenants (2) en une rangée,
une unité de séparation (4) pourvue d'une première roue étoilée (6) et d'une deuxième roue étoilée (8), chacune d'elles présentant des compartiments de logement (10) pour loger chacun des contenants (2) rapprochés en une position de logement (A) et les transporter à une position de distribution (B), dans lequel les roues étoilées (6, 8) présentent des axes de rotation (12) parallèles mais un sens de rotation opposé,
**caractérisé en ce**
**que** le dispositif présente une unité de poussée (30) qui comprend au moins un coulisseau de poussée (32) qui peut effectuer des mouvements de va-et-vient dans la zone des positions de distribution (B) dans une direction parallèle aux axes de rotation (12) des roues étoilées (6, 8) et à travers le compartiment de logement (10) respectif.

2. Dispositif selon la revendication 1, **caractérisé en ce que** la première roue étoilée (6) présente un premier entraînement (27) et la deuxième roue étoilée (8) présente un deuxième entraînement (29), et les roues étoilées (6, 8) peuvent ainsi être pilotées indépendamment les unes des autres.

3. Dispositif selon la revendication 1 ou 2, **caractérisé en ce que** le premier entraînement (27) et le deuxième entraînement (29) peuvent être pilotés en un déplacement cadencé.

4. Dispositif selon l'une des revendications précédentes, **caractérisé en ce que** les entraînements (27, 29) peuvent être pilotés de telle manière que les compartiments de logement (10) de la première roue étoilée (6) entre la position de réception (A) et la position de distribution (B) sont décalés par intermittence par rapport aux compartiments de logement (10) de la deuxième roue étoilée (8).

5. Dispositif selon l'une des revendications précédentes, **caractérisé en ce que** les entraînements (27, 29) sont à l'arrêt pendant une opération de poussée en la position de distribution (B).

6. Dispositif selon l'une des revendications précédentes, **caractérisé en ce que** l'unité de poussée (30) présente deux coulisseaux de poussée (32).

7. Dispositif selon la revendication 6, **caractérisé en ce que** les deux coulisseaux de poussée (32) présentent un troisième entraînement (34) commun.

8. Dispositif selon la revendication 7, **caractérisé en ce que** les deux coulisseaux de poussée (32) sont reliés entre eux par l'intermédiaire d'une barre de liaison (38) rigide, et par conséquent le déplacement des deux coulisseaux de poussée (32) a lieu simultanément en la position de distribution (B) de la première roue étoilée (6) et de la deuxième roue étoilée (8).

9. Dispositif selon la revendication 7 ou 8, **caractérisé en ce que** le troisième entraînement (34) est un entraînement à excentrique.

10. Dispositif selon l'une des revendications précédentes, **caractérisé en ce que** l'au moins un coulisseau de poussée (32) traverse complètement le compartiment de logement (10) de la roue étoilée (6, 8) respective lors de l'opération de poussée.

11. Dispositif selon l'une des revendications précédentes, **caractérisé en ce que** l'unité de séparation (4) présente un boîtier (18) pourvu de parois latérales (20), d'un côté supérieur (22) et d'un côté inférieur (24), dans lequel le boîtier (18) présente un élément de guidage (26) pourvu de deux surfaces de guidage (28) qui entourent latéralement, dans la zone d'un troisième ou d'un quatrième quadrant des roues étoilées (6, 8), la roue étoilée (6, 8) respective et par conséquent les contenants (2) sont guidés dans le troisième ou dans le quatrième quadrant par les compartiments de logement (10) et par les surfaces de guidage (28).

12. Dispositif selon l'une des revendications précédentes, **caractérisé en ce qu'**il présente une plaque de réception (40) sur laquelle les contenants (2) prennent appui pendant le déplacement en rotation.

13. Dispositif selon l'une des revendications précédentes, **caractérisé en ce que** la plaque de réception (40) présente des ouvertures de passage (42) dans la zone des positions de distribution (B).

14. Dispositif selon l'une des revendications 1 à 12, **caractérisé en ce que** la plaque de réception (40) forme une arête d'éjection dans la zone des positions de distribution (B).

15. Dispositif selon l'une des revendications précédentes, **caractérisé en ce qu'**il présente par ailleurs un moyen de refoulement (44) pour des porte-produits (46) dans lesquels les coulisseaux de poussée (32) enfoncent les contenants (2) lors de l'opération de poussée.
